# EUROPEAN PATENT APPLICATION

(11) **EP 3 018 570 A1**
(43) Date of publication of application: **11.05.2016**
(21) Application number: 14820185.8
(22) Date of filing: 16.04.2014
(51) Int. Cl.: G06F 3/0481

(54) **DISPLAY SCREEN OF CHANGEABLE SIZE, MOBILE TERMINAL, AND IMPLEMENTATION METHOD THEREFOR**

(30) Priority: 03.07.2013 CN 201310276327
(71) Applicant: Huizhou TCL Mobile Communication Co., Ltd., Huizhou, Guangdong 516006 (CN)
(72) Inventor: ZHAO, Shiqing, Hui Zhou Guangdong 516006 (CN)
(74) Representative: Brachmann, Roland W.
(86) International application number: PCT/CN2014/075517
(87) International publication number: WO 2015/000321

(57) **Abstract**

Disclosed are a display screen of a changeable size, a mobile terminal, and an implementation manner therefor. The display screen of a changeable size comprises a main display screen and a foldable screen. The main display screen and the foldable screen are in a rotation connection. A sensor used for sensing a state of the foldable screen is disposed between the main display screen and the foldable screen. The sensor senses the state of the foldable screen, so that when the foldable screen is expanded, joint display is implemented on the foldable screen and the main display screen, and when the foldable screen is folded, the main display screen performs display separately, thereby implementing a changeable size of the display screen. When the screen is enlarged, it equals to a screen of a tablet computer, and a user can use it to watch videos, play games, or the like; and when the screen becomes small, it equals to a screen of a smart phone, so that a user can conveniently carry it and can make a call when handholding it, and the like.

## Description

### Field of the Invention

The present invention relates to the field of mobile terminal technologies and in particular to a display screen with variable size, a mobile terminal and an implementation method thereof.

### Description of the Related Art

According to the development trend of smartphones and smart tablets, the screen size of an intelligent terminal directly impacts the use state of a terminal user: for a portable and mobile intelligent terminal, such as a smartphone, it is easy to be carried around and convenient for making phone calls and sending messages; on the other hand, a tablet is convenient for the user to go online, watch movies and play games due to the relatively big screen. While bringing wonders and happiness to people's life, intelligent mobile terminals also cause inconvenience to people; people need to carry a cell phone with a relatively small screen and a tablet with a relatively big screen at the same time, and such inconvenience drives developers to develop a novel mobile terminal with advantages of both of the above two types of intelligent mobile terminals.

Due to the rapid development of semiconductor technologies, electronic components and parts used by tablets and cell phones are highly integrated, have increasingly small sizes and occupy very small space in cell phones and tablets; in comparison, the screen takes up the biggest space, and if the screen issue could be solved: the tablet can have the screen folded to become the size of a cell phone, and the cell phone can also become the size of a tablet when its screen is unfolded.

At the same time, smartphones and tablets are not substantially different in essence, and the only difference is the screen size. If these two intelligent terminals are to be designed into one intelligent terminal, it is just necessary to solve the issue that the display screen has a variable size.

### Summary of the Invention

In light of the shortcomings of the prior art, the object of the present invention is to provide a display screen with variable size, a mobile terminal and an implementation method thereof. It is intended to solve the problem of inconvenient portability in the prior art that, to obtain different user experiences, a user needs to carry mobile terminals with big and small screens at the same time.

The present invention employs the following technical solution:
A display screen with variable size, wherein the display screen comprises: a main display screen and a folding screen;
Wherein the main display screen and the folding screen are rotatably connected, and a sensor is arranged between the main display screen and the folding screen for sensing the state of the folding screen.

The display screen with variable size, wherein there are two folding screens, which are arranged at two sides of the main display screen, respectively.

The display screen with variable size, wherein a rotating shaft and a flexible cord are arranged between the main display screen and the folding screen: the rotating shaft is for rotation of the folding screen when it is folded and unfolded; the flexible cord connects between the main display screen and the folding screen.

The display screen with variable size, wherein the sensor is a compression sensor or a proximity sensor.

A display screen with variable size, wherein the display screen comprises: a main display screen and folding screens;
Wherein the main display screen and the folding screen are rotatably connected, and a sensor is arranged between the main display screen and the folding screen for sensing the state of the folding screen.

Unfolding the folding screen to increase the display area and folding the folding screen to decrease the display area.

In the display screen with variable size, there are two folding screens, which are arranged at two sides of the main display screen, respectively.

In the display screen with variable size, a rotating shaft and a flexible cord are arranged between the main display screen and the folding screen: the rotating shaft is for rotation of the folding screen when it is folded and unfolded; the flexible cord connects between the main display screen and the folding screen.

The display screen with variable size, wherein the sensor is a compression sensor or a proximity sensor.

A mobile terminal, wherein it comprises the above display screen with variable size and a control chip; the sensor is connected to the control chip.

The mobile terminal, wherein the sensor comprises a sensing device, a first resistor and a first switch;
Wherein, the moving contact point of the first switch is connected to the sensing device of the sensor via an elastic part, the base point of the first switch is grounded, the static contact point of the first switch is divided into two paths: one path is connected to the power supply terminal of the control chip via the first resistor, and the other path is connected to the general input/output port of the control chip.

An implementation method for the above mobile terminal, wherein the implementation method comprises:
A. When the folding screen is in the unfolded state, information of the unfolded state sensed by the sensor is transmitted to the control chip, and the control chip activates the display of the corresponding folding screen, such that the folding screen and the main display screen display together;
B. When the folding screen is in the folded state, information of the folded state sensed by the sensor is transmitted to the control chip, and the control chip shuts down the display of the corresponding folding screen, such that the main display screen displays.

The implementation method for the mobile terminal, wherein when the sensor is a compression sensor, said Step A specifically comprises:
A1. When the folding screen is in the unfolded state, the compression force between the main display screen and the folding screen connects and turns on the compression sensor between them;
A2. According to the detected connection and on state of the compression sensor, the general input/output port of the control chip activates the display of the corresponding folding screen, such that the folding screen and the main display screen display together.

The implementation method for the mobile terminal, wherein when the sensor is a compression sensor, said Step B specifically comprises:
B1. When the folding screen is in the folded state, there is no compression between the main display screen and the folding screen, which leads to the disconnection of the compression sensor between the two;
B2. According to the detected disconnection state of the compression sensor, the general input/output port of the control chip shuts down the display of the corresponding folding screen, such that the main display screen displays.

The implementation method for the mobile terminal, wherein the folding screen and the main display screen displaying together in said Step A comprises: the main display screen displays together with the folding screen at its left side, the main display screen displays together with the folding screen at its right side, or the main display screen displays together with the folding screens at both sides thereof.

### Advantageous effects:

The present invention provides a display screen with variable size, a mobile terminal and an implementation method thereof, which senses the state of the folding screen with a sensor, such that the folding screen, when it is unfolded, displays together with the main display screen; and the main display screen displays by itself when the folding screen is folded, thereby achieving the variable size of the display screen: when the screen becomes big, it is equivalent to the screen of a tablet, which may be used by a user to watch videos and play games; when the screen becomes small, it is equivalent to the screen of a smartphone, which makes it convenient for a user to carry and hold in hand to dial a call.

### Brief Description of the Drawings

- Fig.1: is a structural block diagram of the display screen with variable size according to the present invention.
- Fig.2: illustrates an embodiment of the display screen with variable size according to the present invention.
- Fig.3: illustrates that the folding screens are in the unfolded state in an embodiment of the display screen with variable size according to the present invention.
- Fig.4: illustrates that the folding screens are in the folded state in an embodiment of the display screen with variable size according to the present invention.
- Fig.5: illustrates the connection between the sensor and the control chip in an embodiment of the mobile terminal according to the present invention.
- Fig.6: is a flow chart of the implementation method for the mobile terminal according to the present invention.

### Detailed Description of the Preferred Embodiment

The present invention provides a display screen with variable size, a mobile terminal and an implementation method thereof. To make the object, technical solution and effect of the present invention clearer and more specific, the present invention will be further described in detail below. It should be understood that the specific embodiments herein are only used to describe the present invention, rather than to limit the present invention.

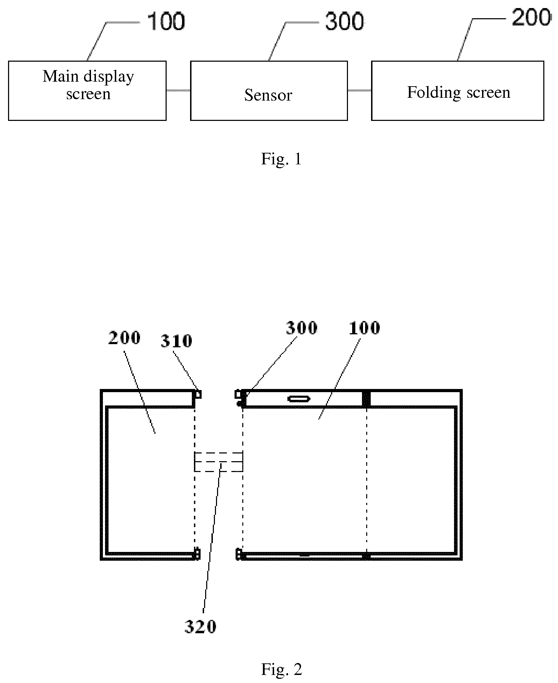

Please refer to Fig.1, which is a structural block diagram of the display screen with variable size according to the present invention. As shown in the figure, the display screen comprises: a main display screen 100 and a folding screen 200; wherein the main display screen 100 and the folding screen 200 are rotatably connected, and a sensor 300 is arranged between the main display screen 100 and the folding screen 200 for sensing the state of the folding screen.

The key of the present invention is to vary the size of the screen display by folding and unfolding of the folding screens: unfolding the folding screen to increase the display area, and its display effect is equivalent to the display effect of a tablet; folding the folding screen to decrease the display area, and its display effect is equivalent to the display effect of a smartphone, which makes it convenient to carry, dial a call and send messages.

Wherein the sensor 300 may be a compression sensor or a proximity sensor. With respect to the compression sensor, the shape of the compression sensor is made to change through two states, opening or closing the main screen and the folding screen, the compression sensor may be equivalent to a switch, when the folding screen 200 is unfolded, the compression force between the main display screen 100 and the folding screen 200 connects and turns on the compression sensor between them, thus the control chip detects the connected sensor and determines that the folding screen 200 has been unfolded, and thus the control chip activates the display on the folding screen 200. Similarly, when the folding screen 200 is closed (also referred to as unfolded), the compression force between the main display screen 100 and the folding screen 200 disappears, such that the compression sensor 300 between them changes from connection to disconnection, thus the control chip detects the disconnected sensor 300 and determines that the folding screen 200 has been folded, and thus the control chip shuts down the display on the folding screen 200. The implementation of the proximity sensor is achieved mainly according to the principle of Hall Effect, which uses a switch-type Hall sensor to sense the unfolding and folding of the folding screen. Since its principle is the prior art, it will not be described herein.

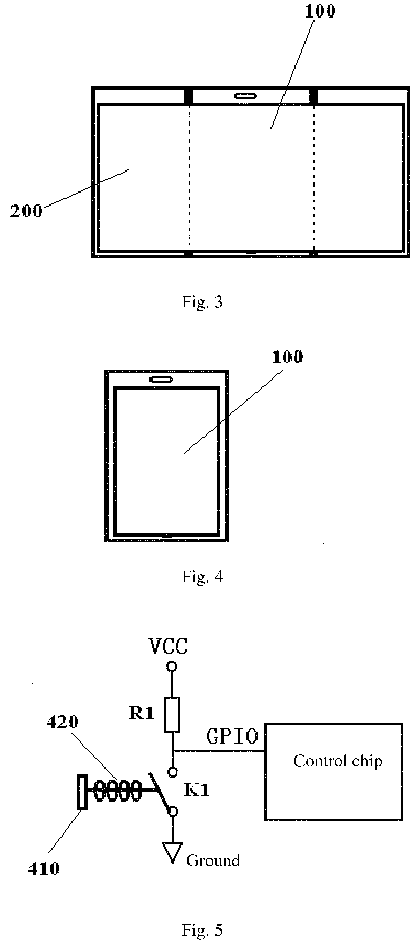

Specifically speaking, please also refer to Fig.2, the display screen comprises: a main display screen 100 and two folding screens 200, the two folding screens 200 being arranged at two sides of the main display screen 100, respectively. A rotating shaft 310 and a flexible cord 320 are arranged between the main display screen 100 and the folding screen 200: the rotating shaft 310 is for rotation of the folding screen when it is folded and unfolded; the flexible cord 320 connects between the main display screen 100 and the folding screen 200. In this embodiment, the sensor 300 is a compression sensor (also referred to as a squeeze sensor), which is located at the side of the main display screen 100 that is connected with the folding screen 200. When the folding screen 200 is unfolded, as shown in Fig.3, the folding screen 200 will squeeze the sensor 300 such that the sensor 300 senses the state change of the folding screen 200, thereby updating the display state of the display screen: making the folding screen 200 connected to the sensor 300 displays together with the main display screen 100. When the folding screen is folded (also referred to as being in the folded state, as shown in Fig.4), the sensor between the folding screen and the main display screen 100 changes from the squeezed state to the ejected state, thereby updating the display state of the display screen: making the main display screen 100 to display by itself.

The present invention further provides a mobile terminal, comprising the above display screen with variable size and a control chip; the sensor is connected to the control chip. With respect to the mobile terminal, the display screen is ordinarily folded together (i.e. the folding screens are in the folded state), such that it is convenient to carry and make phone calls, just like a smartphone; when a big screen is desired for display, e.g., watching movies or playing games, the folding screens are unfolded such that the display screen becomes very big, just like a tablet; when the big screen display is not desired, then the folding screens are folded again for convenient carry and storage.

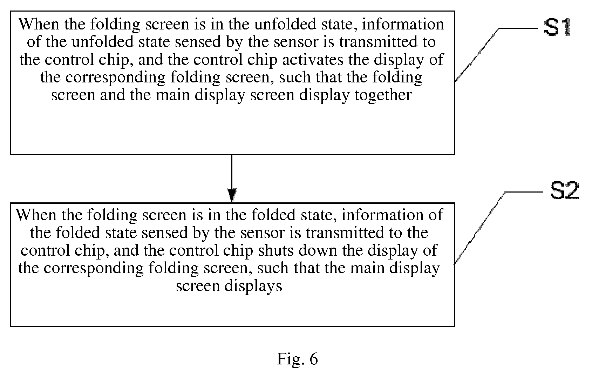

The present invention further provides an implementation method for the above mobile terminal (i.e. a method for implementing the variable size of a display screen), as shown in Fig.6, the implementation method comprising:
S1. When the folding screen is in the unfolded state, information of the unfolded state sensed by the sensor is transmitted to the control chip, and the control chip activates the display of the corresponding folding screen, such that the folding screen and the main display screen display together;
S2. When the folding screen is in the folded state, information of the folded state sensed by the sensor is transmitted to the control chip, and the control chip shuts down the display of the corresponding folding screen, such that the main display screen displays.

Furthermore, as shown in Fig.5, the sensor comprises a sensing device 410, a first resistor R1 and a first switch K1; wherein, the moving contact point of the first switch K1 is connected to the sensing device 410 of the sensor via an elastic part 420, the base point of the first switch K1 is grounded, the static contact point of the first switch K1 is divided into two paths: one path is connected to the power supply terminal VCC of the control chip via the first resistor R1, and the other path is connected to the general input/output port GPIO of the control chip.

How to implement the above variable size of the display screen between the sensor and the control chip will be introduced below: to make it easy to understand, a compression sensor is used as an example for the introduction. It should be understood that the implementation of the proximity sensor is achieved mainly according to the principle of Hall Effect, which uses a switch-type Hall sensor to sense the unfolding and folding of the folding screen. The principle is substantially similar to the squeeze sensor, and it is just that the switch of a proximity sensor is a Hall element.

When the folding screen is in the unfolded state, the compression force between the main display screen and the folding screen acts on the sensing device 410, and makes the moving contact point of the first switch K1 to be in contact with the static contact point via the elastic part 420 (in this embodiment, the elastic part is a spring), such that the first switch K1 is turned on. When the first switch K1 is turned on, the general input/output port GPIO of the control chip is grounded, the level of the general input/output port GPIO is lowered (from a high level to a low level), and when the control chip detects that the general input/output port GPIO changes from a high level to a low level, it activates the display of the corresponding folding screen, such that the folding screen and the main display screen display together.

Similarly, when the folding screen is in the folded state, the compression force between the main display screen and the folding screen disappears, under the action of the elastic part 420, the moving contact point and the static contact point of the first switch K1 are separated such that the first switch K1 is turned off. When the first switch K1 is turned off, the general input/output port GPIO of the control chip is connected to the power supply terminal VCC of the control chip via the first resistor R1, the level of the general input/output port GPIO is raised (from a low level to a high level), and when the control chip detects that the general input/output port GPIO changes from a low level to a high level, it shuts down the display of the corresponding folding screen, such that the main display screen displays.

In summary, when the sensor is a compression sensor, the implementation method comprises two types, one for the folding screen in the unfolded state and the other for the folding screen in the folded state:
When the folding screen is in the unfolded state, the compression force between the main display screen and the folding screen connects and turns on the compression sensor between them; according to the detected connection and on state of the compression sensor, the general input/output port of the control chip activates the display of the corresponding folding screen, such that the folding screen and the main display screen display together.

When the folding screen is in the folded state, there is no compression between the main display screen and the folding screen, which leads to the disconnection of the compression sensor between the two; according to the detected disconnection state of the compression sensor, the general input/output port of the control chip shuts down the display of the corresponding folding screen, such that the main display screen displays.

It should be understood that when there are a plurality of the folding screens, each folding screen may be unfolded or folded according to the user need, and the control chip chooses a software drive according to the state of the folding screen. In this embodiment, since there are two folding screens, it mainly comprises four software drives, i.e. a. the main screen drive; b. the drive after the main screen is added with the right folding screen; c. the drive after the main screen is added with the left folding screen; d. the drive after the main screen is added with the right folding screen and the left folding screen. The basic thinking of the software drive is that the control chip confirms the display size according to the display screen state detected by the sensor switch, and displays the display content according to the actual display size. Thus, the main display screen displaying together with the folding screens comprises: the main display screen displays together with the folding screen at its left side, the main display screen displays together with the folding screen at its right side, or the main display screen displays together with the folding screens at both sides thereof.

In summary, the present invention provides a display screen with variable size, a mobile terminal and an implementation method thereof, wherein the display screen with variable size comprises: a main display screen and a folding screen; the main display screen and the folding screen are rotatably connected, and a sensor is arranged between the main display screen and the folding screen for sensing the state of the folding screen. The sensor is used to sense the state of the folding screen such that the folding screen, when it is unfolded, displays together with the main display screen; and the main display screen displays by itself when the folding screen is folded, thereby achieving the variable size of the display screen: when the screen becomes big, it is equivalent to the screen of a tablet, which may be used by a user to watch videos and play games; when the screen becomes small, it is equivalent to the screen of a smartphone, which makes it convenient for a user to carry and hold in hand to dial a call.

It should be understood that applications of the present invention are not limited to the above examples. To those skilled in the art, improvements or modifications may be made according to the above description, and all of these improvements or modifications shall be encompassed by the appended claims of the present invention.

## Claims

1. A display screen with variable size, **characterized in that** the display screen comprises: a main display screen and a folding screen;
Wherein the main display screen and the folding screen are rotatably connected, and a sensor is arranged between the main display screen and the folding screen for sensing the state of the folding screen.

2. The display screen with variable size according to Claim 1, **characterized in that** there are two folding screens, which are arranged at two sides of the main display screen, respectively.

3. The display screen with variable size according to Claim 2, **characterized in that** a rotating shaft and a flexible cord are arranged between the main display screen and the folding screen: the rotating shaft is for rotation of the folding screen when it is folded and unfolded; the flexible cord connects between the main display screen and the folding screen.

4. The display screen with variable size according to Claim 1, **characterized in that** the sensor is a compression sensor or a proximity sensor.

5. A display screen with variable size, **characterized in that** the display screen comprises: a main display screen and a folding screen;
Wherein the main display screen and the folding screen are rotatably connected, and a sensor is arranged between the main display screen and the folding screen for sensing the state of the folding screen;
Unfolding the folding screen to increase the display area and folding the folding screen to decrease the display area.

6. The display screen with variable size according to Claim 5, **characterized in that** there are two folding screens, which are arranged at two sides of the main display screen, respectively.

7. The display screen with variable size according to Claim 6, **characterized in that** a rotating shaft and a flexible cord are arranged between the main display screen and the folding screen: the rotating shaft is for rotation of the folding screen when it is folded and unfolded; the flexible cord connects between the main display screen and the folding screen.

8. The display screen with variable size according to Claim 5, **characterized in that** the sensor is a compression sensor or a proximity sensor.

9. A mobile terminal, **characterized in that** it comprises the display screen with variable size according to Claim 1 or 5 and a control chip; the sensor is connected to the control chip.

10. The mobile terminal according to Claim 9, **characterized in that** the sensor comprises a sensing device, a first resistor and a first switch;
Wherein, the moving contact point of the first switch is connected to the sensing device of the sensor via an elastic part, the base point of the first switch is grounded, the static contact point of the first switch is divided into two paths:
one path is connected to the power supply terminal of the control chip via the first resistor, and the other path is connected to the general input/output port of the control chip.

11. An implementation method for the mobile terminal according to Claim 10, **characterized in that** the implementation method comprises:
A. When the folding screen is in the unfolded state, information of the unfolded state sensed by the sensor is transmitted to the control chip, and the control chip activates the display of the corresponding folding screen, such that the folding screen and the main display screen display together;
B. When the folding screen is in the folded state, information of the folded state sensed by the sensor is transmitted to the control chip, and the control chip shuts down the display of the corresponding folding screen, such that the main display screen displays.

12. The implementation method for the mobile terminal according to Claim 11, **characterized in that** when the sensor is a compression sensor, said Step A specifically comprises:
A1. When the folding screen is in the unfolded state, the compression force between the main display screen and the folding screen connects and turns on the compression sensor between them;
A2. According to the detected connection and on state of the compression sensor, the general input/output port of the control chip activates the display of the corresponding folding screen, such that the folding screen and the main display screen display together.

13. The implementation method for the mobile terminal according to Claim 11, **characterized in that** when the sensor is a compression sensor, said Step B specifically comprises:
B1. When the folding screen is in the folded state, there is no compression between the main display screen and the folding screen, which leads to the disconnection of the compression sensor between the two;
B2. According to the detected disconnection state of the compression sensor, the general input/output port of the control chip shuts down the display of the corresponding folding screen, such that the main display screen displays.

14. The implementation method for the mobile terminal according to Claim 11, **characterized in that** the folding screen and the main display screen displaying together in said Step A comprises: the main display screen displays together with the folding screen at its left side, the main display screen displays together with the folding screen at its right side, or the main display screen displays together with the folding screens at both sides thereof.
